# EUROPÄISCHE PATENTSCHRIFT

(11) **EP 2 753 498 B1**
(45) Veröffentlichungstag und Bekanntmachung des Hinweises auf die Patenterteilung: **28.08.2019**
(21) Anmeldenummer: 12731459.9
(22) Anmeldetag: 04.07.2012
(51) Int. Cl.: B60N 2/838, B60N 2/809, B60N 2/829, B60N 2/821

(54) **HÖHENVERSTELLBARE KOPFSTÜTZE FÜR EINEN FAHRZEUGSITZ UND FAHRZEUGSITZ MIT EINER HÖHENVERSTELLBAREN KOPFSTÜTZE**
HEIGHT-ADJUSTABLE HEAD RESTRAINT FOR A VEHICLE SEAT AND VEHICLE SEAT WITH A HEIGHT-ADJUSTABLE HEAD RESTRAINT
APPUI-TÊTE RÉGLABLE EN HAUTEUR POUR SIÈGE DE VÉHICULE ET SIÈGE DE VÉHICULE DOTÉ D'UN APPUI-TÊTE RÉGLABLE EN HAUTEUR

(30) Priorität: 07.09.2011 DE 102011112503
(43) Veröffentlichungstag der Anmeldung: 16.07.2014
(73) Patentinhaber: Adient Luxembourg Holding S.à r.l., 1855 Luxembourg (LU)
(72) Erfinder: MORILHAT, Philippe, F-67640 Lipsheim (FR); PTASINSKY, Mikulas, 08701 Giraltovce (SK); PASTOREK, Peter, 02001 Puchov (SK)
(74) Vertreter: Finger, Catrin
(86) Internationale Anmeldenummer: PCT/EP2012/062992
(87) Internationale Veröffentlichungsnummer: WO 2013/034332

(56) Entgegenhaltungen:
- DE-A1- 19 727 097
- DE-A1-102006 033 137
- DE-B3- 10 335 268
- DE-B3-102006 045 516
- US-A1- 2009 008 972
- US-A1- 2011 175 422

## Beschreibung

Die Erfindung betrifft eine höhenverstellbare Kopfstütze für einen Fahrzeugsitz. Weiterhin betrifft die Erfindung einen Fahrzeugsitz mit einer höhenverstellbaren Kopfstütze.

Im Stand der Technik werden Kopfstützen an zwei stabförmigen Halteelementen an einem oberen Ende einer Rückenlehne eines Fahrzeugsitzes angeordnet, wobei die Halteelemente zumindest abschnittsweise in korrespondierend ausgeformte Aufnahmemittel in der Rückenlehne des Fahrzeugsitzes einschiebbar sind. In Abhängigkeit einer Eintauchtiefe der Halteelemente in die Rückenlehne ist eine Höhe der Kopfstütze einstellbar.

Aus der DE 103 35 268 B3 ist eine Kopfstütze für den Sitz eines Automobils bekannt, bei der mit einfachen Mitteln erreicht wird, daß bei einem Stoß gegen das Automobil und einer abrupten Beschleunigung der Kopf der sitzenden Person gegen ein vorgeschobenes und angehobenes Teil der Kopfstütze wirksam aufgefangen werden kann.

Aufgabe der vorliegenden Erfindung ist es, eine gegenüber dem Stand der Technik verbesserte höhenverstellbare Kopfstütze für einen Fahrzeugsitz und einen verbesserten Fahrzeugsitz anzugeben.

Hinsichtlich der höhenverstellbaren Kopfstütze für einen Fahrzeugsitz wird die Aufgabe durch die im Anspruch 1 angegebenen Merkmale gelöst.

Hinsichtlich des Fahrzeugsitzes mit einer höhenverstellbaren Kopfstütze wird die Aufgabe durch die im Anspruch 9 angegebenen Merkmale gelöst.

Vorteilhafte Weiterbildungen der Erfindung sind Gegenstand der Unteransprüche.

Bei der höhenverstellbaren Kopfstütze für einen Fahrzeugsitz ist zumindest ein Kopfstützenpolster der Kopfstütze erfindungsgemäß mittels einer Aufnahmeplatte gestellfest an einem Aufnahmeschlitten eines Höhenverstellmechanismus befestigt, wobei der Aufnahmeschlitten mittels zumindest zweier gegenläufig auf den Aufnahmeschlitten einwirkender Betätigungszüge höhenverschiebbar an zumindest einem Führungselement des Höhenverstellmechanismus angeordnet ist, welcher in oder an einem Halteelement der Kopfstütze angeordnet ist.

Dadurch ist ein gegenüber dem Stand der Technik leichter bedienbarer und komfortablerer Höhenverstellmechanismus für eine Kopfstütze an einem Fahrzeugsitz ermöglicht.

Zweckmäßigerweise ist ein besonders flach bauender Höhenverstellmechanismus für eine Kopfstütze eines Fahrzeugsitzes ermöglicht, wobei insbesondere keine metallischen, stabförmigen Halteelemente zwischen einer Rückenlehne des Fahrzeugsitzes und der Kopfstütze sichtbar sind.

In einer besonders vorteilhaften Ausführungsform ist der Höhenverstellmechanismus der Kopfstütze mittels eines Elektromotors antreibbar.

In einer weiteren vorteilhaften Ausführungsform ist eine Neigung der Kopfstütze gegenüber einer Rückenlehne des Fahrzeugsitzes einstellbar.

Bevorzugt ist das Halteelement unbeweglich an einer Rückenlehne des Fahrzeugsitzes angeordnet, wobei die Kopfstütze oder zumindest das Kopfstützenpolster relativ zu Fahrzeugsitz und Halteelement höhen- und/oder neigungsveränderlich am Halteelement angeordnet ist.

Zweckmäßigerweise ist eine Stirnseite der Aufnahmeplatte korrespondierend zu einer Rückseite des Kopfstützenpolsters ausgebildet, welches form-, stoff- und/oder kraftschlüssig an der Stirnseite der Aufnahmeplatte angeordnet ist, wobei an einer Rückseite der Aufnahmeplatte zumindest ein Befestigungsmittel angeordnet ist. Mittels der Befestigungsmittel ist die Kopfstütze auf einfache Art und Weise bevorzugt reversibel an zumindest einer Komponente des Höhenverstellmechanismus angeordnet.

Vorteilhafterweise ist ein die Rückenlehne des Fahrzeugsitzes überragender Abschnitt des Halteelements vollständig oder nahezu vollständig von Abdeckelementen umschlossen, wobei die jeweils halbschalenförmig ausgebildeten Abdeckelemente randseitig umlaufend derart korrespondierend zueinander ausgeformt sind, dass die Abdeckelemente aneinander angeordnet einen Hohlraum ausbilden, in welchem das Halteelement angeordnet ist. Dadurch ist ein sichtbarer Abschnitt des bevorzugt metallischen Halteelements allseitig von den Abdeckelementen umschlossen und eine Verletzungsgefahr des Sitzinsassen ist reduziert.

Der Höhenverstellmechanismus umfasst bevorzugt ein Trägerelement, welches gestellfest am Halteelement angeordnet ist und Aufnahmemittel zur form-, kraft- und/oder stoffschlüssigen Aufnahme des Führungselements, weitere Aufnahmemittel zur form- und/oder kraftschlüssigen Aufnahme der Betätigungszüge, einen Halteabschnitt und eine zentral angeordnete Ausnehmung umfasst. Auf diese Weise sind alle Komponenten des Höhenverstellmechanismus am Trägerelement unter Ausbildung einer Baueinheit angeordnet. Eine solche Baueinheit ist einfach und zeitsparend am Halteelement montierbar.

In einer vorteilhaften Ausführungsform ist das Führungselement im Wesentlichen u-förmig mit einem runden Querschnitt ausgeformt und umfasst eine Basis und zwei parallel oder nahezu parallel zueinander angeordnete Schenkel, deren jeweilige Enden zueinander ausgerichtet abgewinkelt sind. Die Schenkel ermöglichen vorteilhafterweise dabei eine reibungsarme Führung des Aufnahmeschlittens.

Besonders bevorzugt ist der Aufnahmeschlitten an den beiden Schenkeln des Führungselements verschiebbar angeordnet, wozu beidseitig am oder im Aufnahmeschlitten jeweils eine Führung ausgeformt oder eingebracht ist, welche korrespondierend zu den Schenkeln des Führungselements ausgeformt ist und auf diesen gleitet.

Besonders zweckmäßigerweise ist an jeder Führung eine Öffnung entlang der Längsausdehnung der Führung ausgeformt, deren Breite im Vergleich zu einer Breite der Führung derart verringert ist, dass die Schenkel des Führungselements durch die Öffnung hindurch in die Führung eingebracht und formschlüssig in der Führung gehalten sind. Auf diese Weise kann der Aufnahmeschlitten zeiteffizient und werkzeuglos rastend an den Schenkel des Führungselements angeordnet werden, wobei das Führungselement vorteilhafterweise bereits im Trägerelement montiert sein kann.

In einer zweckmäßigen Ausführungsform weist der Aufnahmeschlitten an seiner Vorderseite zumindest eine Befestigungsaufnahme auf, welche korrespondierend zu den Befestigungsmitteln an der Rückseite der Aufnahmeplatte ausgebildet sind. Dadurch kann eine reversible mechanische Wirkverbindung zwischen Höhenverstellmechanismus und Kopfstütze ausgebildet werden.

In einer weiteren zweckmäßigen Ausführungsform sind an einer Rückseite des Aufnahmeschlittens eine erste Aufnahme für einen oberen Betätigungszug, welcher oberseitig auf den Aufnahmeschlitten einwirkt, und eine zweite Aufnahme für einen unteren Betätigungszug, welcher unterseitig auf den Aufnahmeschlitten einwirkt, angeordnet, wobei die zweite Aufnahme zumindest abschnittsweise führungsartig ausgeformt ist, so dass ein Federelement derart in der zweiten Aufnahme anordenbar ist, dass ein endseitig am Betätigungszug angeordneter Nippel auf ein erstes Ende des Federelements einwirkt, wobei ein zweites Ende des Federelements mit dem Aufnahmeschlitten in Wirkverbindung steht. Dadurch ist eine spielfreie Betätigung des Aufnahmeschlittens mittels der beiden Betätigungszüge ermöglicht.

Ausführungsbeispiele der Erfindung werden im Folgenden anhand von Zeichnungen näher erläutert.

Dabei zeigen:
- Fig. 1: schematisch eine perspektivische Ansicht einer an einem Halteelement angeordneten Kopfstütze,
- Fig. 2: schematisch eine Frontansicht einer an einem Halteelement angeordneten Kopfstütze,
- Fig. 3: schematisch eine Seitenansicht einer an einem Halteelement angeordneten Kopfstütze,
- Fig. 4: schematisch eine Frontansicht einer an einem Halteelement angeordneten Kopfstütze, wobei sich die Kopfstütze in der höchsten Verstellposition befindet,
- Fig. 5: schematisch eine Seitenansicht einer an einem Halteelement angeordneten Kopfstütze, wobei sich die Kopfstütze in der höchsten Verstellposition befindet,
- Fig. 6: schematisch eine Frontansicht einer an einem Halteelement angeordneten Kopfstütze, wobei sich die Kopfstütze in der untersten Verstellposition befindet,
- Fig. 7: schematisch eine Seitenansicht einer an einem Halteelement angeordneten Kopfstütze, wobei sich die Kopfstütze in der untersten Verstellposition befindet,
- Fig. 8: schematisch eine perspektivische Ansicht eines Kopfstützenpolsters,
- Fig. 9: schematisch eine perspektivische Frontansicht einer Aufnahmeplatte eines Kopfstützenpolsters,
- Fig. 10: schematisch eine perspektivische Rückansicht einer Aufnahmeplatte eines Kopfstützenpolsters,
- Fig. 11: schematisch eine perspektivische Ansicht eines vorderen Abdeckelementes,
- Fig. 12: schematisch eine perspektivische Ansicht eines hinteren Abdeckelementes,
- Fig. 13: schematisch eine perspektivische Ansicht eines Höhenverstellmechanismus einer Kopfstütze in mittlerer Position,
- Fig. 14: schematisch eine perspektivische Ansicht eines Höhenverstellmechanismus einer Kopfstütze in höchster Position,
- Fig. 15: schematisch eine perspektivische Ansicht eines Höhenverstellmechanismus einer Kopfstütze in unterster Position,
- Fig. 16: schematisch eine perspektivische Rückansicht eines Höhenverstellmechanismus einer Kopfstütze,
- Fig. 17: schematisch eine perspektivische Ansicht eines Trägerelementes,
- Fig. 18: schematisch eine perspektivische Ansicht eines Führungselementes,
- Fig. 19: schematisch eine perspektivische Ansicht eines Aufnahmeschlittens,
- Fig. 20: schematisch eine perspektivische Ansicht eines oberen Betätigungszuges,
- Fig. 21: schematisch eine perspektivische Ansicht eines unteren Betätigungszuges, und
- Fig. 22: schematisch eine perspektivische Ansicht eines Federelementes.

Einander entsprechende Teile sind in allen Zeichnungen mit den gleichen Bezugszeichen versehen.

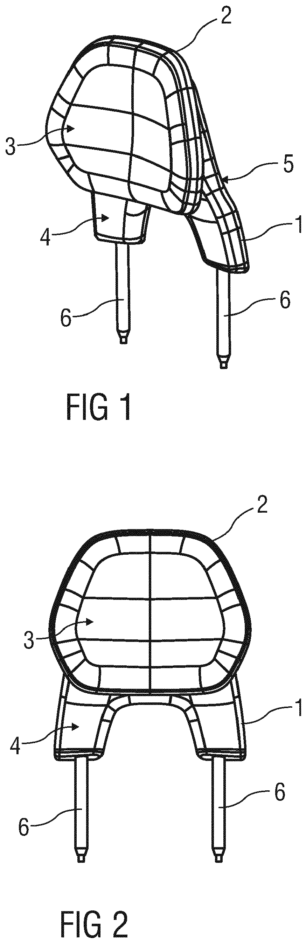

In Figur 1 ist schematisch eine perspektivische Ansicht einer an einem Halteelement 1 angeordneten Kopfstütze 2 dargestellt. Besonders bevorzugt sind Halteelement 1 und Kopfstütze 2 als bauliche Einheit ausgebildet, welche üblicherweise als Kopfstütze 2 bezeichnet wird.

Dabei umfasst die Kopfstütze 2 zumindest ein Kopfstützenpolster 3, welches in Richtung des Sitzinsassen weisend an der Kopfstütze 2 angeordnet ist. Das Halteelement 1 ist zumindest abschnittsweise mit einem vorderen Abdeckelement 4 und einem hinteren Abdeckelement 5 verkleidet. An einem unteren Ende des Halteelements 1 sind zwei Führungsdorne 6 angeordnet, welche in korrespondierenden Aussparungen in einer Rückenlehne eines nicht dargestellten Fahrzeugsitzes anordenbar sind. Dabei ist das Halteelement 1 gestellfest mit der Rückenlehne des Fahrzeugsitzes gekoppelt.

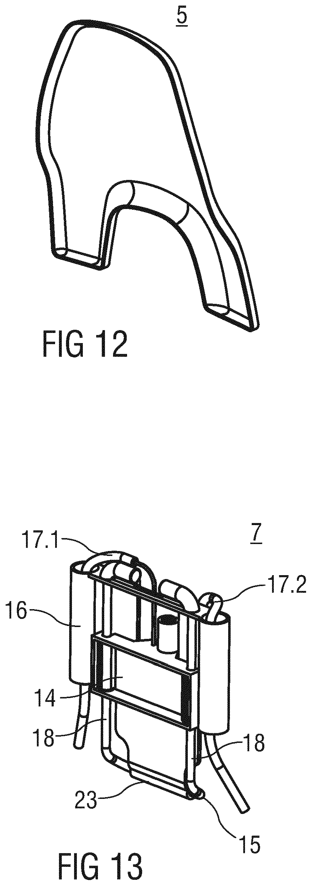

Eine Höhenverstellung der Kopfstütze 2 relativ zum Fahrzeugsitz erfolgt mittels eines Höhenverstellmechanismus 7, welcher in den Figuren 13 bis 16 näher dargestellt ist. Dabei ist das Halteelement 1 unbeweglich an bzw. abschnittsweise in der Rückenlehne des Fahrzeugsitzes angeordnet, während die Kopfstütze 2 relativ zu Fahrzeugsitz und Halteelement 1 höhen- und/oder neigungsveränderlich am Halteelement 1 angeordnet ist.

In einer ersten Ausführungsvariante kann die Kopfstütze 2 höhenveränderlich am Halteelement 1 angeordnet sein.

In einer zweiten, nicht dargestellten Ausführungsvariante kann die Kopfstütze 2 höhen- und/oder neigungsveränderlich am Halteelement 1 angeordnet sein.

Dabei weist die Höheneinstellung bevorzugt einen Verfahrweg von 60 mm auf.

Die Neigungsverstellung weist bevorzugt einen derartigen Schwenkwinkel auf, aus welchem an einem oberen Ende der Kopfstütze 2 ein Verfahrweg von 40 mm resultiert.

In Figur 2 ist schematisch eine Frontansicht der am Halteelement 1 angeordneten Kopfstütze 2 dargestellt.

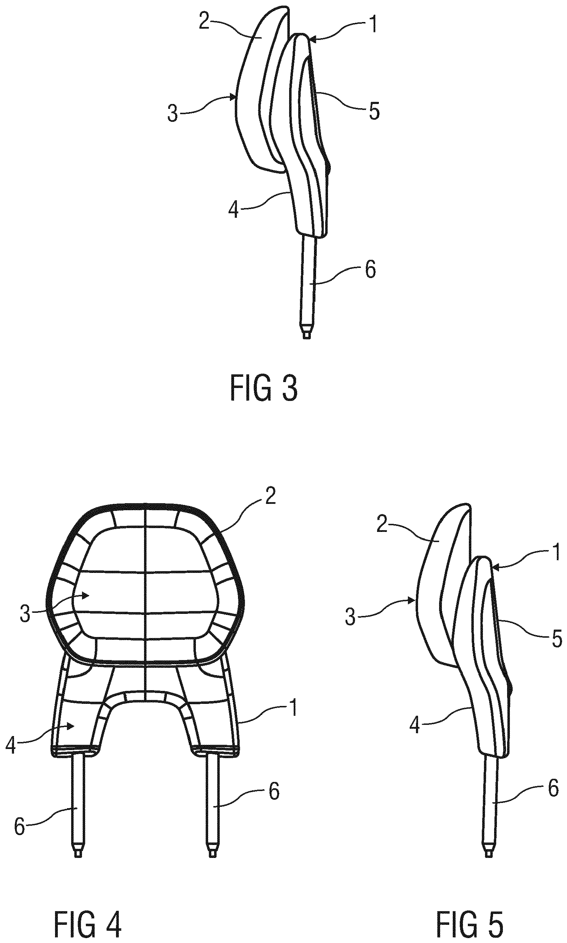

In Figur 3 ist schematisch eine Seitenansicht der am Halteelement 1 angeordneten Kopfstütze 2 dargestellt.

In Figur 4 ist schematisch eine Frontansicht der am Halteelement 1 angeordneten Kopfstütze 2 dargestellt, wobei sich die Kopfstütze 2 in der höchsten Verstellposition des Höhenverstellmechanismus 7 befindet.

In Figur 5 ist schematisch eine Seitenansicht der am Halteelement 1 angeordneten Kopfstütze 2 dargestellt, wobei sich die Kopfstütze 2 in der höchsten Verstellposition des Höhenverstellmechanismus 7 befindet.

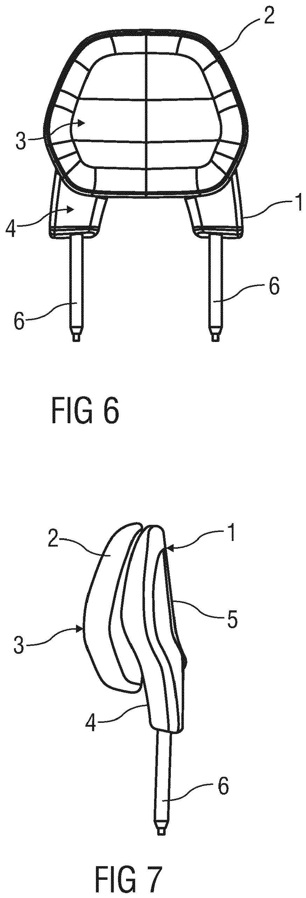

In Figur 6 ist schematisch eine Frontansicht der am Halteelement 1 angeordneten Kopfstütze 2 dargestellt, wobei sich die Kopfstütze 2 in der untersten Verstellposition des Höhenverstellmechanismus 7 befindet.

In Figur 7 ist schematisch eine Seitenansicht der am Halteelement 1 angeordneten Kopfstütze 2 dargestellt, wobei sich die Kopfstütze 2 in der untersten Verstellposition des Höhenverstellmechanismus 7 befindet.

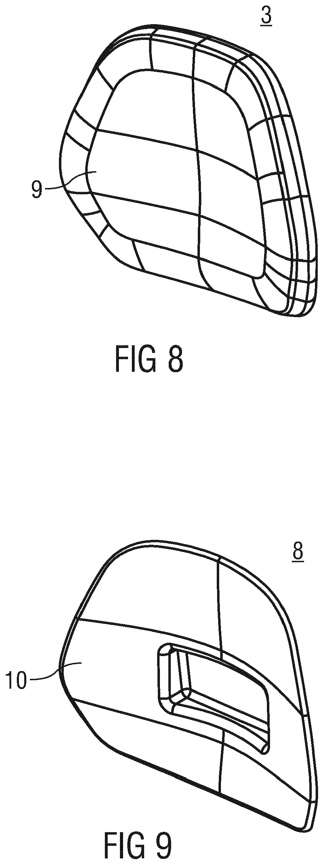

In Figur 8 ist schematisch eine perspektivische Ansicht des Kopfstützenpolsters 3 dargestellt. Bei diesem Kopfstützenpolster 3 handelt es sich vorzugsweise um ein herkömmliches Kopfstützenpolster, welches aus einem aufgeschäumten, formstabilen und elastischen Kunststoff gebildet ist. Dabei ist zumindest eine in Richtung auf einen Fahrzeuginsassen gerichtete Oberfläche 9 des Kopfstützenpolsters 3 mit einem entsprechenden Material, beispielsweise Leder oder Stoff, bedeckt.

In Figur 9 ist schematisch eine perspektivische Frontansicht einer Aufnahmeplatte 8 des Kopfstützenpolsters 3 dargestellt.

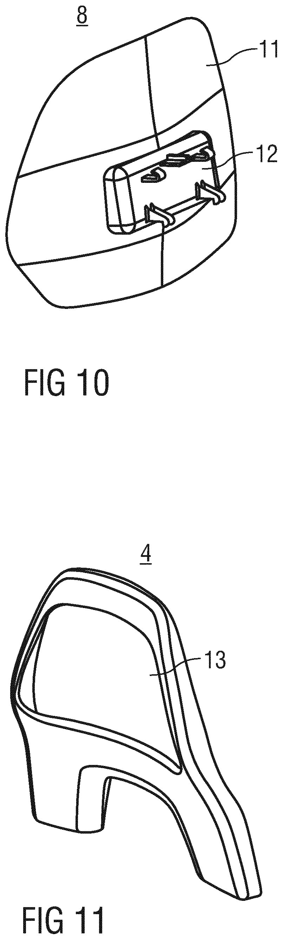

In Figur 10 ist schematisch eine perspektivische Rückansicht der Aufnahmeplatte 8 des Kopfstützenpolsters 3 dargestellt.

Eine Stirnseite 10 der Aufnahmeplatte 8 ist korrespondierend zu einer Rückseite des Kopfstützenpolsters 3 ausgebildet, welches form-, stoff- und/oder kraftschlüssig an der Stirnseite 10 der Aufnahmeplatte 8 anordenbar ist.

An der Rückseite 11 der Aufnahmeplatte 8 ist eine Mehrzahl von Befestigungsmitteln 12, beispielweise herkömmliche Rastnasen, bevorzugt zentral angeordnet.

In Figur 11 ist schematisch eine perspektivische Ansicht des vorderen Abdeckelementes 4 dargestellt. Dieses vordere Abdeckelement 4 ist vorzugsweise halbschalenförmig, beispielsweise aus einem Kunststoff oder einem Kunststoffgemisch, ausgebildet. Im vorderen Abdeckelement 4 ist eine Aussparung 13 derart ausgeformt, dass die Befestigungsmittel 12 der Aufnahmeplatte 8 in montiertem Zustand von Halteelement 1 und Kopfstütze 2 durch die Aussparung 13 hindurchführbar sind, wobei eine Funktion des Höhenverstellmechanismus 7 vollumfänglich ermöglicht ist.

In Figur 12 ist schematisch eine perspektivische Ansicht des hinteren Abdeckelementes 5 dargestellt. Das hintere Abdeckelement 5 ist vorzugsweise halbschalenförmig, beispielsweise aus einem Kunststoff oder einem Kunststoffgemisch, ausgebildet. Dabei ist das hintere Abdeckelement 5 randseitig umlaufend derart korrespondierend zum vorderen Abdeckelement 4 ausgeformt, dass die jeweils halbschalenförmig ausgebildeten Abdeckelemente 4, 5 aneinander angeordnet einen Hohlraum ausbilden, in welchem das Halteelement 1 angeordnet ist. Dabei ist das Halteelement 1 vollständig oder nahezu vollständig von den Abdeckelementen 4, 5 umschlossen. Dadurch ist das bevorzugt metallische Halteelement 1 allseitig von den Abdeckelementen 4, 5 umschlossen und eine Verletzungsgefahr des Sitzinsassen ist reduziert.

In Figur 13 ist schematisch eine perspektivische Ansicht des Höhenverstellmechanismus 7 der Kopfstütze 2 in mittlerer Position dargestellt.

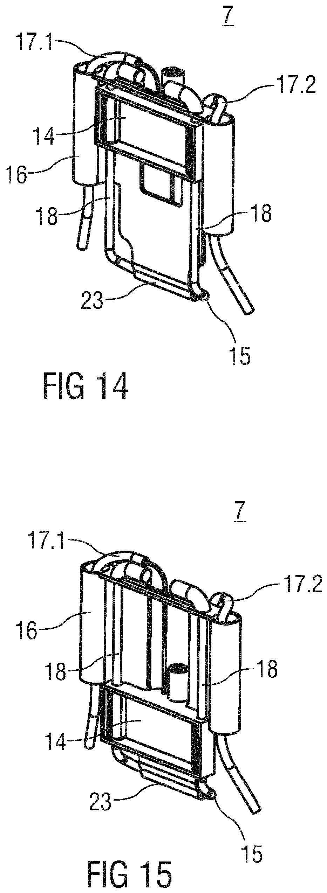

In Figur 14 ist schematisch eine perspektivische Ansicht des Höhenverstellmechanismus 7 der Kopfstütze 2 in höchster Position dargestellt.

In Figur 15 ist schematisch eine perspektivische Ansicht eines Höhenverstellmechanismus 7 der Kopfstütze 2 in unterster Position dargestellt.

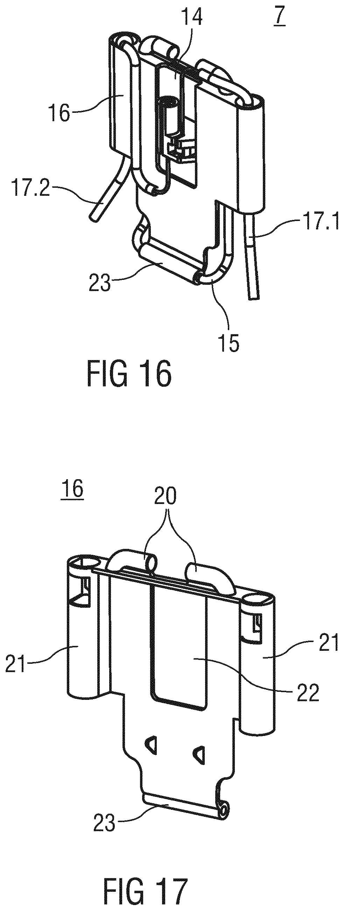

In Figur 16 ist schematisch eine perspektivische Rückansicht des Höhenverstellmechanismus 7 der Kopfstütze 2 dargestellt.

Der Höhenverstellmechanismus 7 umfasst zumindest einen Aufnahmeschlitten 14, zumindest ein Führungselement 15, ein Trägerelement 16 und zwei Betätigungszüge 17.1 und 17.2.

Der Aufnahmeschlitten 14 ist höhenverschiebbar am Führungselement 15 angeordnet. Dazu ist das Führungselement 15 im Wesentlichen u-förmig aus einem vorzugsweise metallischen Werkstoff mit einem runden Querschnitt ausgebildet. An den beiden parallel oder nahezu parallel zueinander angeordneten Schenkeln 18 des Führungselements 15 ist der Aufnahmeschlitten 14 formschlüssig angeordnet. Dazu ist beidseitig am oder im Aufnahmeschlitten 14 jeweils eine Führung 19 ausgeformt oder eingebracht, welche korrespondierend zu den Schenkeln 18 des Führungselements 15 ausgeformt ist und auf diesen gleitet. Das Führungselement 15 ist form-, kraft- und/oder stoffschlüssig im Trägerelement 16 angeordnet.

In Figur 17 ist schematisch eine perspektivische Ansicht eines solchen Trägerelementes 16 dargestellt. Das Trägerelement 16 umfasst Aufnahmemittel 20 zur kraft-, form- und/oder stoffschlüssigen Aufnahme des Führungselements 15, weitere Aufnahmemittel 21 zur form- und/oder kraftschlüssigen Aufnahme der Betätigungszüge 17.1 und 17.2, einen Halteabschnitt 23 und eine zentral angeordnete Ausnehmung 22.

Die Aufnahmemittel 21 sind vorzugsweise seitlich am Trägerelement 16 an- oder ausgeformt und als herkömmliche Führungen für die Betätigungszüge 17.1 und 17.2 ausgebildet, welche durch die Aufnahmemittel 21 zumindest abschnittsweise hindurchführbar sind. Der Halteabschnitt 23 ist unterseitig am Trägerelement 16 an- oder ausgeformt.

In nicht dargestellter Art und Weise ist das Trägerelement 16 mit dem Halteelement 1 mechanisch gekoppelt.

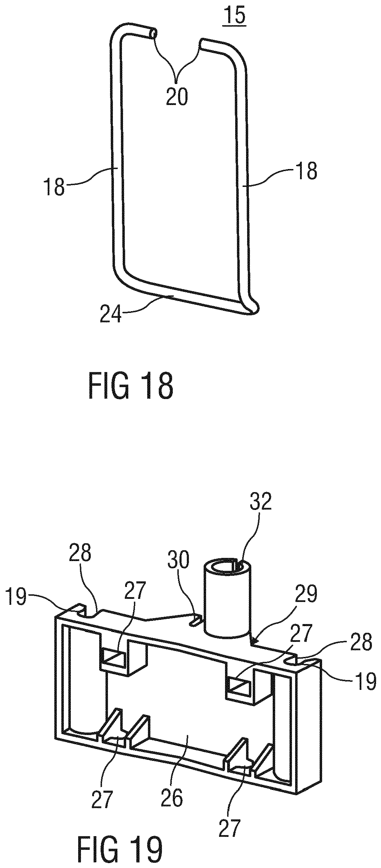

In Figur 18 ist schematisch eine perspektivische Ansicht des Führungselementes 15 dargestellt. Das Führungselement 15 ist im Wesentlichen u-förmig mit einem runden Querschnitt ausgeformt und umfasst eine Basis 24, zwei parallel oder nahezu parallel zueinander angeordnete Schenkel 18, deren jeweilige Enden 25 zueinander ausgerichtet abgewinkelt sind.

In Figur 19 ist schematisch eine perspektivische Ansicht des Aufnahmeschlittens 14 dargestellt. Dieser weist an seiner Vorderseite 26 Befestigungsaufnahmen 27 auf, welche korrespondierend zu den Befestigungsmitteln 12 an der Rückseite 11 der Aufnahmeplatte 8 ausgebildet sind. Dadurch ist zwischen den Befestigungsmitteln 12 der Aufnahmeplatte 8 und den Befestigungsaufnahmen 27 des Aufnahmeschlittens 14 eine bevorzugt reversible mechanische Wirkverbindung, beispielsweise eine Rastverbindung, ausbildbar.

Am oder im Aufnahmeschlitten 14 ist beidseitig jeweils eine Führung 19 ausgeformt oder eingebracht, welche korrespondierend zu den Schenkeln 18 des Führungselements 15 ausgeformt ist. An jeder Führung 19 ist dabei eine Öffnung 28 entlang der Längsausdehnung der Führung 19 ausgeformt, deren Breite im Vergleich zur Breite der Führung 19 derart verringert ist, dass die Schenkel 18 des Führungselements 15 durch die Öffnung 28 hindurch unter zeitweiser, insbesondere elastischer, Aufweitung der selbigen in die Führung 19 eingebracht und formschlüssig in der Führung 19 gehalten, beispielweise verrastet, werden können.

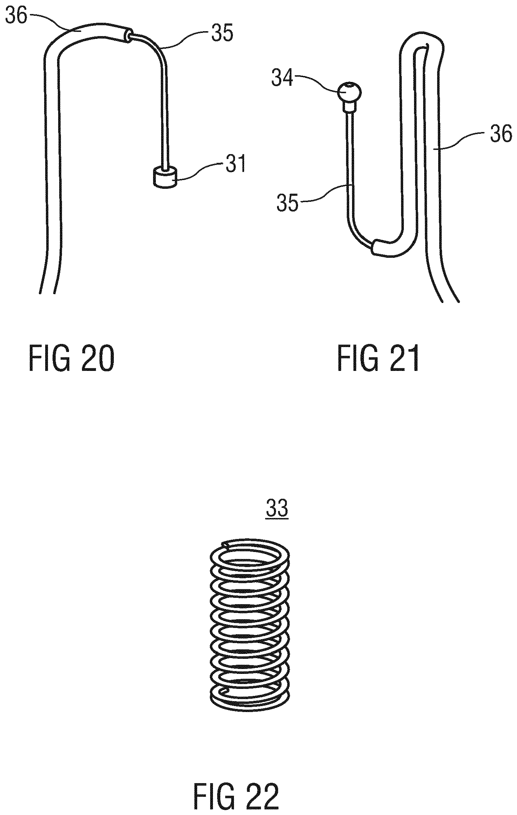

An einer Rückseite 29 des Aufnahmeschlittens 14 ist eine erste Aufnahme 30 für einen oberen Betätigungszug 17.1, welcher oberseitig auf den Aufnahmeschlitten 14 einwirkt, ausgeformt. Diese Aufnahme 30 ist vorzugsweise als herkömmliche Aufnahme eines Seilzugs ausgebildet und korrespondierend zu einem Aufnahmenippel 31 des Betätigungszuges 17.1 ausgeformt. Weiterhin ist an der Rückseite 29 des Aufnahmeschlittens 14 eine zweite Aufnahme 32 für einen unteren Betätigungszug 17.2, welcher unterseitig auf den Aufnahmeschlitten 14 einwirkt, angeordnet. Dabei ist die zweite Aufnahme 32 zumindest abschnittsweise führungsartig ausgeformt, so dass ein Federelement 33, welches in Figur 22 näher dargestellt ist, derart in der zweiten Aufnahme 32 anordenbar ist, dass ein endseitig am Betätigungszug 17.2 angeordneter Nippel 34 auf ein erstes Ende des Federelements 33 einwirkt, wobei ein zweites Ende des Federelements 33 auf den Aufnahmeschlitten 14 einwirkt. Dadurch ist eine spielfreie Betätigung des Aufnahmeschlittens 14 mittels der beiden Betätigungszüge 17.1 und 17.2 ermöglicht.

In Figur 20 ist schematisch eine perspektivische Ansicht des oberen Betätigungszuges 17.1 dargestellt. Dabei handelt es sich um einen herkömmlichen Betätigungs- oder Seilzug, welcher ein bewegliches Maschinenelement zur Übertragung einer mechanischen Bewegung und/oder einer Zugkraft mittels einer flexibel verlegbaren Kombination aus einem Drahtseil 35 und einer in Verlaufsrichtung stabilen, das Drahtseil in Unfangsrichtung umschließenden Hülle 36 ist. Endseitig ist am Drahtseil 35 der Aufnahmenippel 31 angeordnet.

In Figur 21 ist schematisch eine perspektivische Ansicht des unteren Betätigungszuges 17.2 dargestellt, welcher als herkömmlicher Betätigungs- oder Seilzug ausgebildet ist. Endseitig ist am Drahtseil 35 des unteren Betätigungszuges 17.2 der Nippel 34 angeordnet.

In Figur 22 ist schematisch eine perspektivische Ansicht des Federelementes 33 dargestellt, welches bevorzugt als herkömmliche Spiraldruckfeder ausgeformt ist.

Im Betrieb des Höhenverstellmechanismus 7 ist das Führungselement 15 zumindest abschnittsweise mit dem Trägerelement 16 gekoppelt. Die Basis 24 des Führungselementes 15 ist im Halteabschnitt 23 des Trägerelements 16 angeordnet und die Enden 25 des Führungselementes 15 sind in den jeweiligen Aufnahmemitteln 20 des Trägerelements 16 angeordnet. An den Schenkeln 18 des Führungselementes 15 wird der Aufnahmeschlitten 14 mittels seiner Führungen 19 in der bereits beschriebenen Weise angeordnet, so dass der Aufnahmeschlitten 14 an den Schenkeln 18 herauf- und heruntergleiten kann. Dabei sind die Aufnahmen 30 und 32 an der Rückseite 29 des Aufnahmeschlittens 14 in der zentral angeordneten Ausnehmung 22 des Trägerelements 16 angeordnet und ragen aus selbiger rückseitig hinaus. Mittels der Betätigungszüge 17.1 und 17.2 ist jeweils eine Zugkraft auf den Aufnahmeschlitten 14 aufbringbar, wobei der obere Betätigungszug 17.1 oberseitig und der untere Betätigungszug 17.2 unterseitig auf den Aufnahmeschlitten 14 einwirkt. Dabei bewirkt eine Zugkraft des oberen Betätigungszuges 17.1 eine Verstellung des Aufnahmeschlittens 14 und des daran angeordneten Kopfstützenpolsters 3 oder der Kopfstütze 2 in Richtung einer oberen Position, während eine Zugkraft des unteren Betätigungszuges 17.2 eine Verstellung des Aufnahmeschlittens 14 und des daran angeordneten Kopfstützenpolsters 3 oder der Kopfstütze 2 in Richtung einer unteren Position bewirkt. Mittels des Federelementes 33 wird in der beschriebenen Art und Weise eine spielfreie Betätigung der Betätigungszüge 17.1 und 17.2 ermöglicht.

In einer nicht dargestellten Ausführungsform kann der Höhenverstellmechanismus 7 an Stelle der Betätigungszüge 17.1 und 17.2 elektromotorisch betätigt werden.

### Bezugszeichenliste

- 1: Halteelement
- 2: Kopfstütze
- 3: Kopfstützenpolster
- 4: vorderes Abdeckelement
- 5: hinteres Abdeckelement
- 6: Führungsdorn
- 7: Höhenverstellmechanismus
- 8: Aufnahmeplatte
- 9: Oberfläche
- 10: Stirnseite
- 11: Rückseite
- 12: Befestigungsmittel
- 13: Aussparung
- 14: Aufnahmeschlitten
- 15: Führungselement
- 16: Trägerelement
- 17: Betätigungszug
- 17.1: oberer Betätigungszug
- 17.2: unterer Betätigungszug
- 18: Schenkel
- 19: Führung
- 20: Aufnahmemittel
- 21: weitere Aufnahmemittel
- 22: Ausnehmung
- 23: Halteabschnitt
- 24: Basis
- 25: Ende
- 26: Vorderseite
- 27: Befestigungsaufnahme
- 28: Öffnung
- 29: Rückseite
- 30: Aufnahme
- 31: Aufnahmenippel
- 32: zweite Aufnahme
- 33: Federelement
- 34: Nippel
- 35: Drahtseil
- 36: Hülle

## Patentansprüche

1. Höhenverstellbare Kopfstütze (2) für einen Fahrzeugsitz, wobei zumindest ein Kopfstützenpolster (3) mittels einer Aufnahmeplatte (8) gestellfest an einem Aufnahmeschlitten (14) eines Höhenverstellmechanismus (7) befestigt ist, wobei der Aufnahmeschlitten (14) höhenverschiebbar an zumindest einem Führungselement (15) des Höhenverstellmechanismus (7) angeordnet ist, welcher in oder an einem Halteelement (1) der Kopfstütze (2) angeordnet ist, wobei an einem unteren Ende des Halteelements (1) zwei Führungsdorne (6) angeordnet sind, welche in korrespondierenden Aussparungen in einer Rückenlehne des Fahrzeugsitzes anordenbar sind, und das Halteelement (1) gestellfest mit der Rückenlehne gekoppelt ist,
**dadurch gekennzeichnet, dass**
der Aufnahmeschlitten (14) mittels zumindest zweier gegenläufig auf den Aufnahmeschlitten (14) einwirkender Betätigungszüge (17.1, 17.2) höhenverschiebbar an dem zumindest einen Führungselement (15) des Höhenverstellmechanismus (7) angeordnet ist.

2. Höhenverstellbare Kopfstütze (2) nach Anspruch 1,
**dadurch gekennzeichnet, dass** eine Stirnseite (10) der Aufnahmeplatte (8) korrespondierend zu einer Rückseite des Kopfstützenpolsters (3) ausgebildet ist, welches form-, stoff- und/oder kraftschlüssig an der Stirnseite (10) der Aufnahmeplatte (8) angeordnet ist, wobei an einer Rückseite (11) der Aufnahmeplatte (8) zumindest ein Befestigungsmittel (12) angeordnet ist.

3. Höhenverstellbare Kopfstütze (2) nach Anspruch 1 oder 2, **gekennzeichnet durch** ein Trägerelement (16) des Höhenverstellmechanismus (7), welches gestellfest am Halteelement (1) angeordnet ist und Aufnahmemittel (20) zur form-, kraft- und/oder stoffschlüssigen Aufnahme des Führungselements (15), weitere Aufnahmemittel (21) zur form- und/oder kraftschlüssigen Aufnahme der Betätigungszüge (17.1 und 17.2), einen Halteabschnitt (23) und eine zentral angeordnete Ausnehmung (22) umfasst.

4. Höhenverstellbare Kopfstütze (2) nach einem der vorherigen Ansprüche,
**dadurch gekennzeichnet, dass** das Führungselement (15) im Wesentlichen u-förmig mit einem runden Querschnitt ausgeformt ist und eine Basis (24) und zwei parallel oder nahezu parallel zueinander angeordnete Schenkel (18) umfasst, deren jeweilige Enden (25) zueinander ausgerichtet abgewinkelt sind.

5. Höhenverstellbare Kopfstütze (2) nach Anspruch 4,
**dadurch gekennzeichnet, dass** an den beiden Schenkeln (18) des Führungselements (15) der Aufnahmeschlitten (14) verschiebbar angeordnet ist, wozu beidseitig am oder im Aufnahmeschlitten (14) jeweils eine Führung (19) ausgeformt oder eingebracht ist, welche korrespondierend zu den Schenkeln (18) des Führungselements (15) ausgeformt ist und auf diesen gleitet.

6. Höhenverstellbare Kopfstütze (2) nach Anspruch 5,
**dadurch gekennzeichnet, dass** an jeder Führung (19) eine Öffnung (28) entlang der Längsausdehnung der Führung (19) ausgeformt ist, deren Breite im Vergleich zu einer Breite der Führung (19) derart verringert ist, dass die Schenkel (18) des Führungselements (15) durch die Öffnung (28) hindurch in die Führung (19) eingebracht und formschlüssig in der Führung (19) gehalten sind.

7. Höhenverstellbare Kopfstütze (2) nach Anspruch 2,
**dadurch gekennzeichnet, dass** der Aufnahmeschlitten (14) an seiner Vorderseite (26) zumindest eine Befestigungsaufnahme (27) aufweist, welche korrespondierend zu den Befestigungsmitteln (12) an der Rückseite (11) der Aufnahmeplatte (8) ausgebildet sind.

8. Höhenverstellbare Kopfstütze (2) nach einem der vorherigen Ansprüche,
**dadurch gekennzeichnet, dass** an einer Rückseite (29) des Aufnahmeschlittens (14) eine erste Aufnahme (30) für einen oberen der Betätigungszüge (17.1), welcher oberseitig auf den Aufnahmeschlitten (14) einwirkt, und eine zweite Aufnahme (32) für einen unteren der Betätigungszüge (17.2), welcher unterseitig auf den Aufnahmeschlitten (14) einwirkt, angeordnet sind, wobei die zweite Aufnahme (32) zumindest abschnittsweise führungsartig ausgeformt ist, so dass ein Federelement (33) derart in der zweiten Aufnahme (32) anordenbar ist, dass ein endseitig am unteren Betätigungszug (17.2) angeordneter Nippel (34) auf ein erstes Ende des Federelements (33) einwirkt, wobei ein zweites Ende des Federelements (33) mit dem Aufnahmeschlitten (14) in Wirkverbindung steht.

9. Fahrzeugsitz mit einer höhenverstellbaren Kopfstütze (2) nach einem der vorherigen Ansprüche,
**dadurch gekennzeichnet, dass** das Halteelement (1) unbeweglich an der Rückenlehne des Fahrzeugsitzes angeordnet ist, wobei das zumindest eine Kopfstützenpolster (3) relativ zu Fahrzeugsitz und Halteelement (1) höhen- und/oder neigungsveränderlich am Halteelement (1) angeordnet ist.

10. Fahrzeugsitz nach Anspruch 9,
**dadurch gekennzeichnet, dass** ein die Rückenlehne des Fahrzeugsitzes überragender Abschnitt des Halteelements (1) vollständig oder nahezu vollständig von Abdeckelementen (4, 5) umschlossen ist, wobei die jeweils halbschalenförmig ausgebildeten Abdeckelemente (4, 5) randseitig umlaufend derart korrespondierend zueinander ausgeformt sind, dass die Abdeckelemente (4, 5) aneinander angeordnet einen Hohlraum ausbilden, in welchem das Halteelement (1) angeordnet ist.

## Claims

1. Height-adjustable head restraint (2) for a vehicle seat, wherein at least one head restraint cushion (3) is fastened by means of a receiving plate (8) fixedly to a receiving slide (14) of a height adjustment mechanism (7), wherein the receiving slide (14) is arranged in a height-adjustable manner on at least one guide element (15) of the height adjustment mechanism (7), said height adjustment mechanism being arranged in or on a holding element (1) of the head restraint (2), wherein two guide pins (6) are arranged on a lower end of the holding element (1), said guide pins being able to be arranged in corresponding recesses in a backrest of the vehicle seat, and the holding element (1) is coupled fixedly to the backrest, **characterized in that** the receiving slide (14) is arranged in a height-adjustable manner on the at least one guide element (15) of the height adjustment mechanism (7) by means of at least two actuating cables (17.1, 17.2) acting in opposing directions on the receiving slide (14).

2. Height-adjustable head restraint (2) according to Claim 1, **characterized in that** a front face (10) of the receiving plate (8) is configured so as to correspond with a rear face of the head restraint cushion (3), which is arranged by means of a positive, material and/or non-positive connection on the front face (10) of the receiving plate (8), wherein at least one fastening means (12) is arranged on a rear face (11) of the receiving plate (8) .

3. Height-adjustable head restraint (2) according to Claim 1 or 2, **characterized by** a carrier element (16) of the height adjustment mechanism (7) which is arranged fixedly on the holding element (1) and comprises receiving means (20) for receiving the guide element (15) by a positive, non-positive and/or material connection, further receiving means (21) for positively and/or non-positively receiving the actuating cables (17.1 and 17.2), a holding portion (23) and a centrally arranged recess (22).

4. Height-adjustable head restraint (2) according to one of the preceding claims, **characterized in that** the guide element (15) is shaped in a substantially U-shaped manner with a round cross section and comprises a base (24) and two arms (18) arranged in parallel or virtually in parallel with one another, the respective ends (25) thereof being bent back and aligned with one another.

5. Height-adjustable head restraint (2) according to Claim 4, **characterized in that** the receiving slide (14) is displaceably arranged on the two arms (18) of the guide element (15), for which in each case a guide (19) is formed or incorporated on or in the receiving slide (14) on both sides, said guide being formed so as to correspond with the arms (18) of the guide element (15) and sliding thereon.

6. Height-adjustable head restraint (2) according to Claim 5, **characterized in that** an opening (28) is formed on each guide (19), along the longitudinal extent of the guide (19), the width thereof being reduced in comparison with a width of the guide (19) such that the arms (18) of the guide element (15) are introduced through the opening (28) into the guide (19) and positively held in the guide (19) .

7. Height-adjustable head restraint (2) according to Claim 2, **characterized in that** the receiving slide (14) on its front face (26) has at least one fastening receiver (27) which is configured so as to correspond with the fastening means (12) on the rear face (11) of the receiving plate (8).

8. Height-adjustable head restraint (2) according to one of the preceding claims, **characterized in that** a first receiver (30) for an upper one of the actuating cables (17.1) which acts on the upper face of the receiving slide (14) and a second receiver (32) for a lower one of the actuating cables (17.2) which acts on the lower face of the receiving slide (14) are arranged on a rear face (29) of the receiving slide (14), wherein the second receiver (32) is formed at least partially in the manner of a guide, so that a spring element (33) is able to be arranged in the second receiver (32) such that a nipple (34) arranged at the end of the lower actuating cable (17.2) acts on a first end of the spring element (33), wherein a second end of the spring element (33) is operatively connected to the receiving slide (14).

9. Vehicle seat with a height-adjustable head restraint (2) according to one of the preceding claims, **characterized in that** the holding element (1) is fixedly arranged on the backrest of the vehicle seat, wherein the at least one head restraint cushion (3) is arranged on the holding element (1) so as to be adjustable in height and/or inclination relative to the vehicle seat and holding element (1).

10. Vehicle seat according to Claim 9, **characterized in that** a portion of the holding element (1) protruding over the backrest of the vehicle seat is enclosed entirely or virtually entirely by the covering elements (4, 5), wherein the covering elements (4, 5) which are configured in each case in the shape of a half shell, are shaped peripherally on the edge so as to correspond with one another, such that the covering elements (4, 5) when arranged on one another form a hollow space in which the holding element (1) is arranged.

## Revendications

1. Appuie-tête réglable en hauteur (2) pour siège de véhicule, dans lequel au moyen d'une plaque de logement (8) au moins un coussin d'appuie-tête (3) est fixé de façon solidaire à une glissière de logement (14) d'un mécanisme de réglage de hauteur (7), dans lequel la glissière de logement (14) est agencée de façon à pouvoir coulisser en hauteur sur au moins un élément de guidage (15) du mécanisme de réglage de hauteur (7), lequel est agencé dans ou sur un élément de maintien (1) de l'appuie-tête (2), dans lequel sur une extrémité inférieure de l'élément de maintien (1) sont agencés deux goujons de guidage (6), lesquels peuvent être agencés dans des échancrures correspondantes dans un dossier du siège de véhicule, et l'élément de maintien (1) est accouplé de façon solidaire avec le dossier, **caractérisé en ce que** la glissière de logement (14) est agencée de façon à pouvoir coulisser en hauteur sur l'au moins un élément de guidage (15) du mécanisme de réglage de hauteur (7) au moyen d'au moins deux câbles d'actionnement (17.1, 17.2) agissant en sens opposés sur la glissière de logement (14).

2. Appuie-tête réglable en hauteur (2) selon la revendication 1, **caractérisé en ce qu'**une face frontale (10) de la plaque de logement (8) est conçue pour correspondre à une face dorsale du coussin d'appuie-tête (3), lequel est agencé sur la face frontale (10) de la plaque de logement (8) par complémentarité de formes, par adhérence de matériau et/ou par engagement de force, dans lequel au moins un moyen de fixation (12) est agencé sur une face dorsale (11) de la plaque de logement (8).

3. Appuie-tête réglable en hauteur (2) selon la revendication 1 ou 2, **caractérisé par** un élément de support (16) du mécanisme de réglage de hauteur (7), lequel est agencé de façon solidaire sur l'élément de maintien (1) et comprend des moyens de logement (20) pour le logement par complémentarité de formes, par adhérence de matériau et/ou par engagement de force de l'élément de guidage (15), des moyens de logement (21) supplémentaires pour le logement par complémentarité de formes et/ou par engagement de force des câbles d'actionnement (17.1, 17.2), une section de maintien (23) et un évidement (22) agencé de manière centrale.

4. Appuie-tête réglable en hauteur (2) selon l'une des revendications ci-dessus, **caractérisé en ce que** l'élément de guidage (15) est conformé essentiellement en forme de U avec une section transversale arrondie et comprend une base (24) et deux pattes (18) agencées en parallèle ou pratiquement en parallèle l'une à l'autre, dont les extrémités respectives (25) sont coudées et alignées l'une par rapport à l'autre.

5. Appuie-tête réglable en hauteur (2) selon la revendication 4, **caractérisé en ce que** la glissière de logement (14) est agencée de façon à pouvoir coulisser sur les deux pattes (18) de l'élément de guidage (15), où un guidage (19) est respectivement conformé ou introduit des deux côtés sur ou dans la glissière de logement (14), lequel est conformé pour correspondre aux pattes (18) de l'élément de guidage (15) et glisse sur celles-ci.

6. Appuie-tête réglable en hauteur (2) selon la revendication 5, **caractérisé en ce que** sur chaque guidage (19) une ouverture (28) est conformée le long de l'étendue en longueur du guidage (19), dont la largeur, comparée à une largeur du guidage (19), est réduite de telle sorte que les pattes (18) de l'élément de guidage (15) sont introduites à travers l'ouverture (28) dans le guidage (19) et sont maintenues dans le guidage (19) par complémentarité de formes.

7. Appuie-tête réglable en hauteur (2) selon la revendication 2, **caractérisé en ce que** la glissière de logement (14) comporte sur sa face avant (26) au moins un logement de fixation (27), lequel est conçu pour correspondre aux moyens de fixation (12) sur la face dorsale (11) de la plaque de logement (8) .

8. Appuie-tête réglable en hauteur (2) selon l'une des revendications ci-dessus, **caractérisé en ce que** sur une face dorsale (29) de la glissière de logement (14) sont agencés un premier logement (30) pour un câble d'actionnement haut (17.1) parmi les câbles d'actionnement, lequel agit sur la glissière de logement (14) sur la face supérieure, et un deuxième logement (32) pour un câble d'actionnement bas (17.2) parmi les câbles d'actionnement, lequel agit sur la glissière de logement (14) sur la face inférieure, dans lequel le deuxième logement (32) est conformé au moins partiellement à la manière d'un guidage, de sorte qu'un élément élastique (33) peut être agencé dans le deuxième logement (32) de telle façon qu'un embout (34) agencé côté extrémité sur le câble d'actionnement bas (17.2) agit sur une première extrémité de l'élément élastique (33), dans lequel une deuxième extrémité de l'élément élastique (33) est raccordée de manière opérante à la glissière de logement (14).

9. Siège de véhicule doté d'un appuie-tête réglable en hauteur (2) selon l'une des revendications ci-dessus, **caractérisé en ce que** l'élément de maintien (1) est agencé de manière immobile sur le dossier du siège de véhicule, dans lequel l'au moins un coussin d'appuie-tête (3) est agencé sur l'élément de maintien (1) de façon à ce que sa hauteur et/ou son inclinaison puisse être modifiée par rapport au siège de véhicule et à l'élément de maintien (1).

10. Siège de véhicule selon la revendication 9, **caractérisé en ce qu'**une section de l'élément de maintien (1) dépassant le dossier du siège de véhicule est complètement ou quasiment complètement enserrée par des éléments de couverture (4, 5), dans lequel les éléments de couverture (4, 5) conçus respectivement en forme de demi-coque sont conformés pour correspondre l'un à l'autre sur la périphérie de leurs bords de telle sorte que les éléments de couverture (4, 5) conçoivent en étant agencés l'un contre l'autre une cavité, à l'intérieur de laquelle l'élément de maintien (1) est agencé.
